Europäisches Patentamt

European Patent Office

Office européen des brevets

(11) Numéro de publication: **0 469 161 A1**

## DEMANDE DE BREVET EUROPEEN

(21) Numéro de dépôt: 89420418.9

(22) Date de dépôt: 25.10.89

(51) Int. Cl.5: **A01G 25/14**, B05B 1/20

(43) Date de publication de la demande:
05.02.92 Bulletin 92/06

(84) Etats contractants désignés:
BE CH DE ES FR GB IT LI LU NL

(71) Demandeur: David, Georges
36 Rue des Carmes
F-01100 Oyonnax(FR)

(72) Inventeur: David, Georges
36 Rue des Carmes
F-01100 Oyonnax(FR)

(74) Mandataire: Arbousse-Bastide, Jean-Claude Philippe
Cabinet Maisonnier 28 rue Servient
F-69003 Lyon(FR)

(54) Rampe d'arrosage à largeur réglable.

(57) L'invention concerne une rampe d'arrosage destinée à s'adapter sur le bec verseur d'un arrosoir.

Sous le boîtier ( 2 ) sont articulés les deux bras d'arrosage ( 3 ) et ( 3 ) . Leur angle ( 5 ) est variable.

Application : réglage de la largeur d'arrosage en fonctions des besoins d'utilisation

Fig. 6

EP 0 469 161 A1

Xerox Copy Centre

## RAMPE D'ARROSAGE A LARGEUR REGLABLE

La présente invention est relative à un dispositif d'arrosage d'un type nouveau , par exemple pour équiper un arrosoir de jardinage , une lance ,ou tout autre système d'arrosage , industriel ou non.

Il est connu d'adapter sur le bec veseur d'un arrosoir , l'embout longitudinal d'une rampe transversale , laquelle comporte des perforations dirigées vers le bas , pour laisser s'écouler le liquide provenant de l'arrosoir.

Certaines rampes d'arrosage sont réalisées de façon télescopique , comme prévu , par exemple , par le brevet français 2 120 485 . Cela permet à l'utilisateur de faire varier la largeur de l'arrosage , mais la réalisation télescopique présente de graves inconvénients pour le fabricant . De plus , le réglage est plus ou moins facile à effectuer par l'utilisateur.

La présente invention a pour but d'éviter ces inconvénients , en réalisant une rampe d'arrosage non télescopique ,à largeur et à débit variables , que l'utilisateur peut adapter et modifier à volonté.

Une rampe d'arrosage selon l'invention comporte un embout longitudinal adaptable sur un arrosoir , alimentation ou autre ,et elle est caractérisée en ce que cet embout est solidaire d'un boîtier possédant deux raccrds sur chacun desquels s'articule , de façon étanche , un bras creux le long duquel sont réparties des perforations d'arrosage , si bien que la rampe présente un aspect d'ensemble ayant sensiblement la forme d'un Y dont les deux bras délimitent un angle d'amplitude réglable à volonté.

Le dessin annexé , donné à titre d'exemple non limitatif , permettra de mieux comprendre les caractéristiques de l'invention, et les avantages qu'elle est susceptible de procurer.

Figure 1 est une vue d'ensemble d'un arrosoir de jardinier , équipé d'une rampe d'arrosage selon l'invention.

Figure 2 montre la rampe en position rentrée , c'est-à-dire une faible largeur d'arrosage.

Figure 3 est une vue en bout , pour une position différente , correspondant à une plus grande largeur d'arrosage.

Figures 4 à 6 montrent trois variantes posibles , pour la réalisation des bras creux orientables.

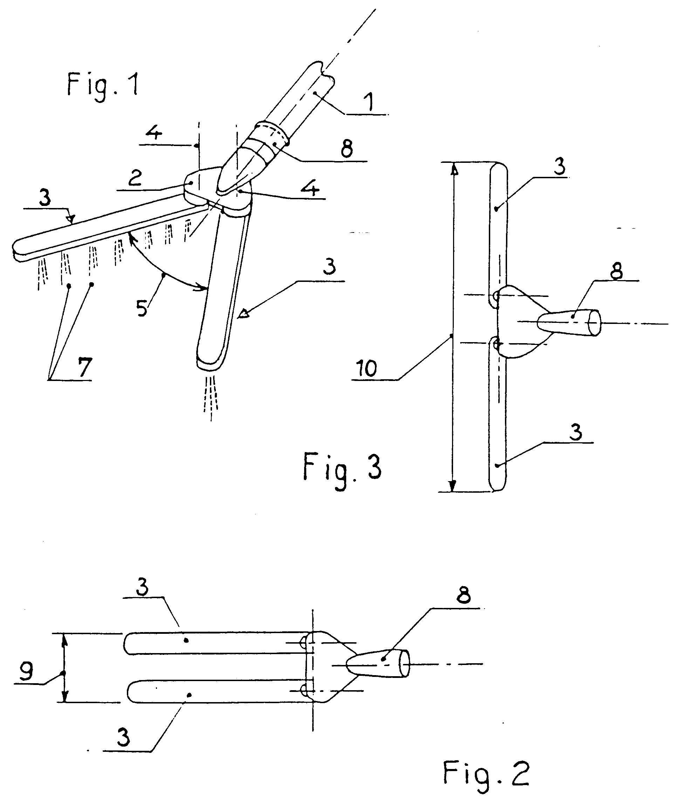

On a montré sur la figure 1 un tube d'alimentation 1 qui peut être le bec verseur d'un arrosoir , ou l'extrémité d'un tuyau d'arrosage .

La rampe d'arrosage selon l'invention comprend essentiellement :
- un boîtier de support creux 2 ;
- deux bras d'arrosage 3 qui s'articulent de façon étanche sous le boîtier 2 .

Grâce à cette disposition , chaque bras 3 peut pivoter autour d'un axe géométrique 4 . On peut ainsi faire varier à volonté la valeur de l'angle 5 qui définit l'écartement des bras 3 . Le long de la partie inférieure de chaque bras 3 ,sont répartis des trous d'arrosage 6 , qui définissent en service , les jets d'arrosage 7 .

Le sommet du boîtier 2 est pourvu , à l'arrière , d'un embout 8 permettent de la raccorder sur le tube d'alimentation 1 ..

Ainsi , on voit , sur les dessins , que la rampe d'arrosage assemblée présente , en plan , une forme analogue à celle d'un Y , dont les deux bras 3 forment un angle 5 de valeur réglable.

La valeur de cet angle peur varier entre :
- une valeur nulle ( figure 2) , ce qui correspond à une largeur d'arrosage minima ;
- environ 180 degrés ( figure 3) , ce qui correspond à une largeur d'arrosage 10 maxima.

Chaque bras 3 comporte , à sa par - tie arrière , un manchon supérieur 11 , susceptible d'être clipsé dans l'ouverture correspondante du boîtier 2 pour y tourner de façon étanche autour de l'axe 4 .

En pratique , chaque bras 3 peut être réalisé de diverses façons.

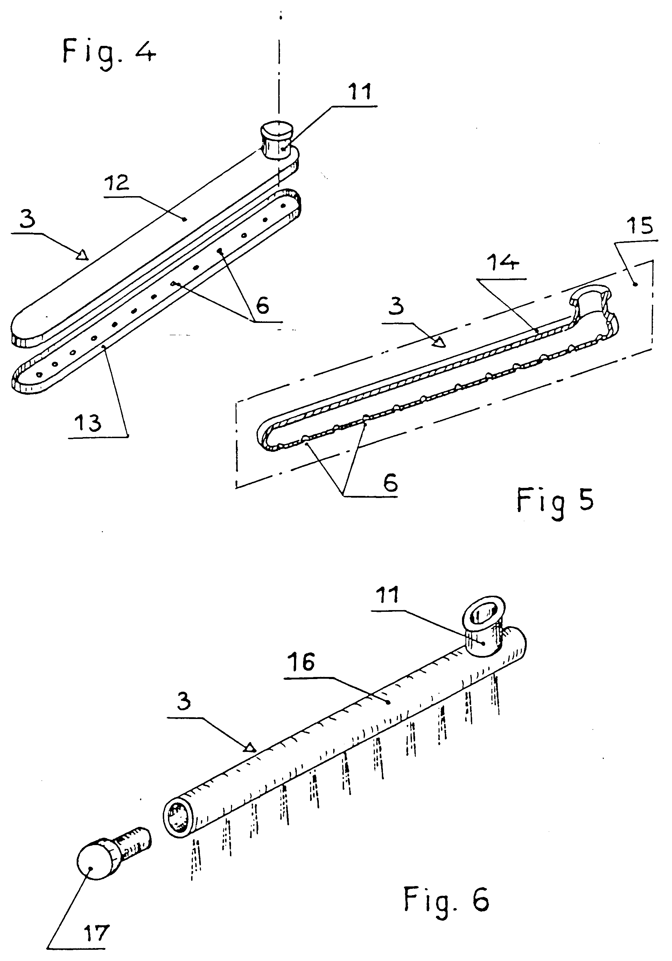

Sur la variante de la figure 4 , une demi-coquille supérieure 12 est surmontée par le manchon 11 . Elle vient s'assembler par clipsage , collage ou soudage , sur le sommet d'une demi-coquille inférieure 13 , au fond de laquelle sont réparties les perforations 6 .

Sur la variante de la figure 5 ,deux demi-coquilles identiques telles que 14 , sont assemblées face à face , suivant un plan de joint 15 sensiblement vertical et longitudinal.

Sur la variante de la figure 6 , le bras est constitué par un tube 16 surmonté à l'arrière par le manchon 11 . A l'extrémité ,on fixe un bouchon amovible 17 . Ce bouchon obture le tube 16 en position d'utilisation : on le retire pour le nettoyage.

**Revendications**

1 - Rampe d'arrosage comportant un embout longitudinal (8) adaptable sur un arrosoir , alimentation ou autre (1) , caractérisée en ce que cet embout (8) est solidaire d'un boîtier (2) possédant deux ouvertures de raccord sur chacune desquelles s'articule , autour d'un axe géométrique (4) et de façon étanche , un bras creux (3) le long duquel sont réparties des perforations d'arrosage (6) , si bien que la rampe présente un aspect d'ensemble ayant sensiblement la forme d'un Y dont les deux bras (3) délimitent entre eux , un angle (5) d'amplitude réglable à volonté.

2 - Rampe d'arrosage suivant la revendication 1 ,caractérisée en ce que la valeur de l'angle (5) peut être choisie à volonté , entre :
- une valeur nulle ( figure 2) , ce qui correspond à une largeur d'arrosage minima ;
- environ 180 degrés ( figure 3) , ce qui correspond à une largeur d'arrosage (10) maxima .

3 - Rampe d'arrosage suivant l'une quelconque des revendications précédentes , caractérisée en ce que chaque bras (3) est surmonté à l'arrière par un manchon tubulaire (11) susceptible d'être clipsé dans l'ouverture correspondante du boîtier (2) pour y tourner de façon étanche autour de l'axe (4).

4 - Rampe d'arrosage suivant l'une quelconque des revendications précédentes , caractérisée en ce que chaque bras (3) comporte une demi-coquille supérieure (12) surmontée par le manchon (11) et qui vient s'assembler par clipsage , collage ou soudage , sur le sommet d'une demi-coquille inférieure (13) au fond de laquelle sont réparties les perforations (6).

5 - Rampe d'arrosage suivant l'une quelconque des revendications 1 à 3 , caractérisée en ce que chaque bras (3) comporte deux demi-coquilles identiques (14) , assemblées face à face , suivant un plan de joint (15) sensiblement vertical et longitudinal.

6 - Rampe d'arrosage suivant l'une quelconque des revendications 1 à 3 , caractérisée en ce que le bras (3) est constitué par un tube (16) surmonté à l'l'arrière par le manchon (11) et à l'extrémité duquel on fixe un bouchon amovible (17).

Fig. 1

Fig. 3

Fig. 2

Fig. 4

11

12

3

6

13

15

14

3

6

Fig 5

11

16

3

Fig. 6

17

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| E | FR-A-2 633 489 (G. DAVID)<br>* Document dans son intégralité *<br>--- | 1-6 | A 01 G 25/14<br>B 05 B 1/20 |
| A | US-A-2 746 799 (L.R. NELSON)<br>* Document dans son intégralité *<br>--- | 1 | |
| A | AU-A- 549 990 (HORTICO)<br>* Figures 1A,1B; revendication 1 *<br>--- | 1 | |
| A | US-A-3 994 443 (SCHENKER)<br>* Abrégé; figure 1; colonne 1, lignes 6-8; colonne 2, lignes 6-21 *<br>----- | 1 | |

**DOMAINES TECHNIQUES RECHERCHES (Int. Cl.5)**

A 01 G
B 05 B

**Le présent rapport a été établi pour toutes les revendications**

| Lieu de la recherche | Date d'achèvement de la recherche | Examinateur |
|---|---|---|
| LA HAYE | 29-05-1990 | GUASTAVINO L. |

EPO FORM 1503 03.82 (P0402)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant